# EUROPÄISCHE PATENTSCHRIFT

(11) **EP 1 995 088 B1**
(45) Veröffentlichungstag und Bekanntmachung des Hinweises auf die Patenterteilung: **16.01.2013**
(21) Anmeldenummer: 08004932.3
(22) Anmeldetag: 17.03.2008
(51) Int. Cl.: B60G 13/00, B60G 15/06

(54) **Einsatzlagerteil, elastisches Einsatzlager und Federbeinlageranordnung**
Insert mount component, elastic insert mount and strut support device
Elément de palier d'insertion, élément de palier d'insertion élastique et dispositif de support de jambe de suspension à ressort

(30) Priorität: 23.05.2007 DE 102007023886
(43) Veröffentlichungstag der Anmeldung: 26.11.2008
(73) Patentinhaber: Anvis Deutschland GmbH, 36396 Steinau an der Strasse (DE)
(72) Erfinder: Hermann, Waldemar, 63637 Jossgrund (DE); Grüning, Volker, 39599 Insel (DE); Sauer, Hermann, 63549 Ronnenburg (DE)
(74) Vertreter: Schmid, Nils T.F.

(56) Entgegenhaltungen:
- EP-A- 0 385 416
- EP-A- 0 885 757
- EP-A- 1 547 831
- EP-A- 1 564 037
- BE-A- 435 962
- DE-B- 1 208 638
- DE-C- 4 326 197
- DE-U- 1 650 926
- FR-A- 2 319 813
- US-A- 2 414 743

## Beschreibung

Die Erfindung betrifft ein Einsatzlagerteil, das zur Bildung eines elastischen Einsatzlagers mit einem anderen Einsatzlagerteils gleichen oder ähnlichen Aufbaus kombinierbar ist. Die Erfindung betrifft auch ein elastisches Einsatzlager zum Abstützen eines im wesentlichen axial erstreckenden Bauteils, wie einer Dämpferstange eines Kraftfahrzeug-Federbeins, an einer Fahrzeugkarosserie. Üblicherweise wird das elastische Einsatzlager in einer karosseriefesten Aufnahme untergebracht. Schließlich betrifft die Erfindung eine Federbeinlageranordnung mit einem erfindungsgemäßen elastischen Einsatzlager.

Eine Federbeinlageranordnung ist beispielsweise aus der DE 43 26 197 C2 bekannt, bei der an das Ende einer Dämpferstange ein Ringflansch aufsetzbar ist, der von einem starren Kern umgeben ist. Der starre Kern ist wiederum von einem Elastomerkörper umgeben, der durch zwei miteinander zu verbindenden, vor der Montage von dem Elastomerkörper getrennten Schalenteilen vorkomprimiert wird. Die Kräfte zum Aufbringen des Vorkomprimierung werden durch Schraubverbindungen realisiert, welche gleichzeitig eine Montage der Schalenteile an der Kraftfahrzeugkarosserie bewerkstelligen.

Bei dieser Stoßdämpferlagerung stellt sich allerdings ein hoher Montageaufwand ein, weil zuerst der Flansch, der Kern sowie der Elastomerkörper zur Bildung einer Bauteileinheit in einem Vorfertigungsschritt hergestellt werden müssen, wobei anschließend die Bauteileinheit über den Flansch an der Dämpferstange zu befestigen ist. Weiterhin fordert die bekannte Federbeinlagerung eine exakt axiale sowie radiale Dimensionierung der Außenschalen, damit die gewünschte Vorkomprimierung der Bauteileinheit sichergestellt werden kann.

EP 0 385 416 offenbart ein fluidgedämpftes Federbeinlager mit zwei symmetrisch aufgebauten Einsatzlagerteilen, die im Montagezustand eine Fluidkammer einschließen. Die Einsatzlagerteile umfassen jeweils eine Außenschale, einen Elastomerkörper und einen Ring zur Aufnahme eines Federbeins. Von dem Ring erstreckt sich der Elastomerkörper als Ringstrebe geneigt hin zu einer abgewinkelten Anlagefläche an der Außenschale des Einsatzlagerteils.

Ein anderes elastisches Lager ist aus DE 16509264 bekannt, bei dem eine konusförmige Hülse umlaufend von einem Elastomerkörper umgeben ist. Ein Außengehäuse ist an dem Elastomerkörper parallel zur konischen Außenfläche der Hülse anvulkanisiert.

BE-A-435962 zeigt in den Figuren 11 - 13 einen Ersatz lagerteil, bei dem in der Gruβenschele der Radial abschnitt zum axial abschnitt orthogonal steht. Der Elastomer körper wird aber in Axialrichtung nicht komprimiert.

Es ist Aufgabe der Erfindung, eine elastische Lagerung für ein axial erstreckendes Bauteil an einer Fahrzeugkarosserie bereitzustellen, wobei der Fertigungs- und Montageaufwand gering gehalten werden sollen.

Diese Aufgabe wird durch die Merkmale von Anspruch 1 gelöst. Erfindungsgemäß ist ein Einsatzlagerteil zur Bildung eines elastischen Einsatzlagers mit einem anderen Einsatzlagerteil gleichen oder ähnlichen Aufbaus zu kombinieren. Das erfindungsgemäße Einsatzlagerteil sowie das andere Einsatzlagerteil sollen zusammen in eine Aufnahme eines karosseriefesten Bauteils eingesetzt werden. Das erfindungsgemäße Einsatzlagerteil hat eine umlaufende Außenschale mit einem Radialabschnitt und einem Axialabschnitt. Des weiteren hat das erfindungsgemäße Einsatzlagerteil einen von der Außenschale umgebenen Elastomerkörper, wobei der Radialabschnitt sowie der Axialabschnitt der Außenschale ein Ausweichen des Elastomerkörpers bei Belastung in Radial- oder Axialrichtung verhindern. Schließlich hat das erfindungsgemäße Einsatzlager einen starren Kern mit einem axialen Durchgang zum Befestigen des Einsatzlagers beispielsweise an dem Ende einer Stange eines Federbeins. Erfindungsgemäß soll der Kern derart in Axialrichtung über das dazu benachbarte Ende des Axialabschnitts der Außenschale vorstehen, daß beim losen Aneinanderlegen der Einsatzlagerteile in einem Vormontageschritt sich letztere im wesentlichen auf radialer Höhe des Kerns berühren und somit ein Axialabstand zwischen den sich gegenüberliegenden Axialabschnitten der Außenschale gebildet ist, so daß bei insbesondere axialer Annäherung der Axialabschnitte der Elastomerkörper komprimiert wird. Dabei verhindern der Radialabschnitt und der Axialabschnitt ein Ausweichen des Elastomerkörpers, wodurch der Elastomerkörper des Einsatzlagerteils in einen definierten vorkomprimierten Zustand mit der Montage gebracht wird.

Mit dem erfindungsgemäßen Einsatzlagerteil ist es möglich, flexibel und nicht mehr notwendigerweise in einer bestimmten Montagereihenfolge eine elastische Lagerung für ein sich im wesentlichen axial erstreckendes Bauteil, wie eine Dämpferstange eines Kraftfahrzeugs-Federbeins, bereitzustellen. Ferner ermöglicht die zumindest Zweiteilung des elastischen Einsatzlagers, daß größere Fertigungstoleranzen erlaubt sind. Auch die Montage an sich vereinfacht sich deutlich, weil zum einen durch den Einsetzcharakter des Einsatzlagerteils eine exakte Position der Einsatzlagerteile in Bezug auf die Fahrzeugkarosserie einfach geschaffen wird, zum anderen das Befestigen des Einsatzlagers deutlich vereinfacht ist, beispielsweise indem die Aufnahme durch einen entsprechenden Deckel unter Aufbringung von Vorspannkräften geschlossen wird.

Bei einer bevorzugten Ausführung der Erfindung besteht das Einsatzlagerteil ausschließlich aus der Außenschale, dem Elastomerkörper und dem starren Kern. Vorzugsweise ist das Einsatzlagerteil ringförmig. Dabei kann der Radialabschnitt zum Axialabschnitt der Außenschale ortogonal stehen.

Bei einer bevorzugten Ausführung der Erfindung ist der radial äußere Abschnitt ohne Radialrichtungskomponente und der radial innere Radialabschnitt ohne Axialrichtungskomponente ausgebildet.

Bei einer bevorzugten Ausführung der Erfindung hat der Elastomerkörper auf einer freien von dem Radialabschnitt der Außenschale abgewandten Radialseite einen axialen Hinterschnitt. Auf diese Weise kann die Art und Verteilung der Vorkomprimierung innerhalb des Elastomerkörpers bei Aufbringen der Montagekräfte eingestellt werden, je nach dem wie der Hinterschnitt geformt und bemessen ist.

Um außerdem eine Einstellung der Vorkomprimierung des Elastomerkörpers einstellen zu können, erstreckt sich der Elastomerkörper von dem Kern, insbesondere von einem verstärkten Radialende des Kerns, im montierten Zustand sowohl in Axialrichtung als auch in Radialrichtung weg. Dabei kann die Axialausdehnung größer, vorzugsweise um mehr als 10%, 15% oder 20%, vorzugsweise bis 30%, größer, als die Radialausdehnung sein.

Bei einer weiteren bevorzugten Ausführung der Erfindung belegt der Elastomerkörper eine Innenseite der Außenschale vollständig. Dabei kann vorzugsweise der Elastomerkörper an der Außenschale angeklebt, insbesondere anvulkanisiert, sein.

Bei einer bevorzugten Ausführung der Erfindung hat der Elastomerkörper einen kernseitigen Anlagesteg, der auf gleicher axialer Höhe des Kerns endet, und insbesondere einen schalenseitigen Anlagesteg, der auf gleicher axialer Höhe der Außenschale endet. Auf diese Weise wird bei Erreichen des Montagezustands zuerst der Elastomerkörper kernseitig verformt, um die Vorkomprimierung zu bewirken. Bei Kontaktaufnahme der sich gegenüberliegenden Enden der Außenschalen kommt auch der schalenseitige Anlagesteg mit dem gegenüberliegenden in Kontakt, wodurch ein homogener Elastomerkörper des elastischen Einsatzlagers aus zwei Einsatzlagerteilen gebildet wird.

Um eine einfache Montage des elastischen Einsatzlagers zu gewährleisten, ist eine freie, der Außenschale abgewandte Seite des Kerns des Einsatzlagerteils flach ausgebildet.

Des weiteren betrifft die Erfindung ein elastisches Einsatzlager zum Abstützen eines im wesentlichen axial ersteckenden Bauteils, wie einer Dämpferstange eines Kraftfahrzeug-Federbeins, an einer Fahrzeugkarosserie und zum Montieren in einer karosserienahen Aufnahme. Das Einsatzlager ist mit einem starren Kern, der einen axialen Durchgang zum Befestigen des Bauteils aufweist, einem dem Kern zumindest teilweise radial umgebenden Elastomerkörper und zwei in Axialrichtung hintereinander angeordneten Außenschalen versehen, die den Elastomerkörper zumindest teilweise umgeben. Erfindungsgemäß sollen die beiden Außenschalen in einem Vormontagezustand unter Ausbildung eines Axialabstands zwischen sich an dem Elastomerkörper verliersicher befestigt sein. Aufgrund der Flexibilität und Elastizität des Elastomerkörpers sind die Außenschalenteile derart axial aufeinander zu bewegbar, daß der Elastomerkörper für einen Montageendzustand druckvorgespannt wird. Mit dem erfindungsgemäßen elastischen Einsatzlager kann die Montage des Federbeins insofern vereinfacht werden, als lediglich die mit dem elastischen Einsatzlager über den Durchgang des Kerns gekoppelte Stange des Federbeins in einer Aufnahme eines karosseriefesten Bauteils einfach eingesetzt werden kann. Das Fertigungspersonal hat nur noch ein einziges Bauteil für das elastische Einsatzlager zu bedienen. Damit ist der Montageaufwand deutlich reduziert, wobei eine Fehlmontage annähernd ausgeschlossen ist.

Bei einer bevorzugten Ausführung der Erfindung sind die Außenschalen und ein zugeordneter Elastomerkörperabschnitt aneinander geklebt, insbesondere anvulkanisiert. Bei einer bevorzugten Ausführung der Erfindung ist jede Außenschale ringförmig ausgebildet und hat einen äußeren Axialabschnitt insbesondere ohne Radialrichtungskomponente und einen inneren Radialabschnitt ohne Axialrichtungskomponente. Dabei können die freien Enden der Radialabschnitte aufeinander zu gewandt sein und insbesondere in dem Vormontagezustand vorzugsweise unter Ausbildung eines im wesentlichen stufenfreien Übergangs an deren Innen- und/oder Außenseite aneinanderliegen.

Vorzugsweise kann jeder Außenschale ein umlaufender insbesondere ringförmiger Elastomerkörperabschnitt zugeordnet sein, wobei beide Elastomerkörperabschnitte eine sich von radialen Außenseite insbesondere im Bereich einer Radialmittelachse radial nach hinten erstreckende Aussparung begrenzen. Dabei kann die Aussparung im Vormontagezustand im wesentlichen pilzförmig sein, wobei insbesondere der Stil der Pilzform durch die Außenschalen zumindest teilweise begrenzt ist. Vorzugsweise kann der Aussparung im Montagezustand eine Dreiecksform, insbesondere eine radial nach innen gerichtete Pfeilform, aufweisen. Weiterhin kann zumindest einer oder beide Elastomerkörper an der Aussparung einen axialen Hinterschnitt aufweisen. Bei einer bevorzugten Ausführung der Erfindung sind die Elastomerkörper im Bereich einer sich zugewandten Radialseite derart geformt, daß ausschließlich die Elastomerkörper ohne die Außenschale oder den Kern im Montagezustand einen Hohlraum begrenzen, der insbesondere von den Hinterschnitten der Elastomerkörperabschnitte begrenzt ist. Mit der Anordnung der Aussparung, der Hinterschnitte, des Hohlraums, etc. kann die Vorkomprimierung in Richtung und Betrag innerhalb des Elastomerkörpers je nach Anwendung des Einsatzlagers angepaßt sein.

Bei einer bevorzugten Ausführung der Erfindung haben die Außenschalen, der Elastomerkörper und/oder die Aussparung eine zu einer Radialachse, insbesondere einer radialen Mittelachse, des Einsatzlagers achsensymmetrische Form. Dabei können die Außenschalen, der Elastomerkörper und/oder die Aussparungen ein zu einer Axialachse, insbesondere einer Rotationsachse, des Einsatzlagers symmetrische Form aufweisen.

Bei einer bevorzugten Ausführung der Erfindung, um insbesondere die Vorkomprimierung des Elastomerkörpers nach Erreichen des Montagezustands einstellen zu können, erstreckt sich der Elastomerkörper von dem Kern, insbesondere von einem verstärkten Radialende des Kerns, in dem Vormontagezustand des Einsatzlagers sowohl in Axialrichtung als auch in Radialrichtung weg. Dabei kann die Axialausdehnung größer, vorzugsweise um mehr als 10%, 15% oder 20% vorzugsweise bis 30%, größer, als die Radialausdehnung sein. Vorzugsweise erstreckt sich der Elastomerkörper von dem Kern, insbesondere von einem verstärkten Radialende des Kerns, in dem Montageendzustand des Einsatzlagers sowohl in Axialrichtung als auch in Radialrichtung, wobei eine Radialausdehnung größer, vorzugsweise um mehr als 20%, 30% oder 50% vorzugsweise bis 60%, größer, als die Ausdehnung sein kann.

Bei einer besonders bevorzugten Ausführung der Erfindung ist das erfindungsgemäße Einsatzlager aus zwei strukturell getrennten, oben beschriebenen erfindungsgemäßen Einsatzlagerteilen gebildet.

Vorzugsweise sind einander zugewandte insbesondere flache Radialflächen der Kerne für ein formkomplementäres flächiges Aneinanderlegen in dem Montagezustand geformt. Bei einer bevorzugten Ausführung der Erfindung bildet der Elastomerkörper der jeweiligen Einsatzlagerteile jeweils eine sich zugewandte kernseitige Anlage und eine sich zugewandte schalenseitige Anlage, wobei im Vormontagezustand die kemseitigen Anlagen aneinanderliegen und die schalenseitigen Anlagen mit dem Axialabstand zueinander liegen und im Montagezustand die jeweiligen kernseitigen Anlagen und die jeweiligen schalenseitigen Anlagen in Kontakt kommen.

Vorzugsweise sind die Anlagen durch einen Axialsteg gebildet, wobei insbesondere die radiale Stärke der Axialstege im wesentlichen gleich ist.

Des weiteren betrifft die Erfindung eine Federbeinlageranordnung mit einer karosseriefesten Aufnahme, die entweder durch ein an die Karosserie angebrachtes tellerartiges Bauteil oder durch die Karosserie selbst gebildet ist. In der Aufnahme ist ein erfindungsgemäßes Einsatzlager eingesetzt. Das Einsatzlager kann vorzugsweise in der Aufnahme durch einen ringförmigen Deckel insbesondere mit einem axialen Durchgang gehalten sein.

Weitere Vorteile, Eigenschaften und Merkmale der Erfindung werden durch die folgende Beschreibung einer bevorzugten Ausführung der Erfindung anhand der beiliegenden Zeichnungen deutlich, in denen zeigen:
- Fig. 1: eine Querschnittsansicht einer Anordnung aus zwei Einsatzlagerteilen identischen Aufbaus zur Bildung eines erfindungsgemäßen Einsatzlagers; und
- Fig. 2: eine Querschnittsansicht des in einer Karosseriefesten Aufnahme eingesetzten befestigten elastischen Einsatzlagers.

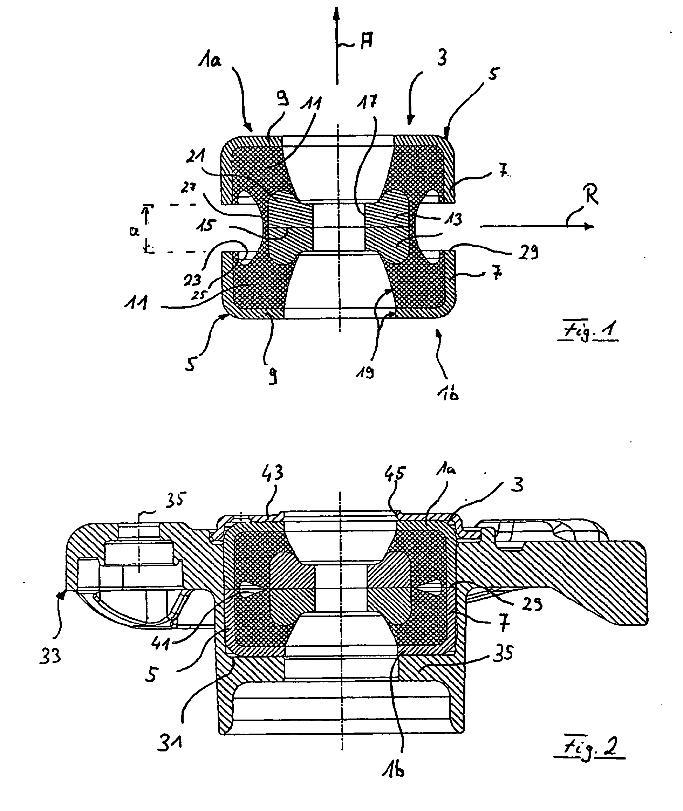

In Fig. 1 sind zwei Einsatzlagerteile identischen Aufbaus im allgemeinen mit der Bezugsziffer 1a, 1b zur Bildung eines elastischen Einsatzlagers 3 gezeigt.

Jedes Einsatzlagerteil 1a, 1b umfaßt eine Außenschale 5, die aus einem Axialring 7 und einem dazu ortogonal stehenden Radialring 9 besteht.

Eine Innenseite der Außenschale 5 ist vollständig mit einem ringförmigen Elastomerkörper 11 belegt, der mit einem starren Kern 13 verbunden ist.

Der starre Kern 13 hat eine flache Radialseite 15, die dem Kern 13 des gegenüberliegenden Einsatzlagerteils 1a, 1b zugewandt ist. Der Kern 13 hat außerdem einen Durchgang 17, durch den sich hindurch eine nicht dargestellte Stange eines Federbeins erstrecken kann, um das erfindungsgemäße Einsatzlager 3 an der Stange zu befestigen. Um einen freien Zugriff auf das Ende der Stange bereitzustellen, haben sowohl die Außenschalen 5 als auch die Elastomerkörper 11 einen konzentrisch gebildeten Durchbruch 19.

Der Elastomerkörper 11 erstreckt sich von einem erweiterten Radialende 21 des Kerns 13 schräg sowohl in Axialrichtung A als auch in Radialrichtung R nach außen. Dabei nimmt die Querschnittsstärke des Elastomerkörpers 11 allmählich zu.

Der Elastomerkörper 11 hat auf seiner dem Elastomerkörper 11 des anderen Einsatzlagerteils 1a, 1b zugewandten Seitenfläche einen Hinterschnitt 23, der von einem radial außenliegenden, außenschalenseitigen Axialsteg 25 sowie einem radial innenliegenden kernseitigen Axialsteg 27 teilweise begrenzt ist.

Wie in Fig. 1 ersichtlich ist, in der ein Vormontagezustand der erfindungsgemäßen Einsatzlagers 3 dargestellt ist, steht der Kern 13 deutlich axial über das freie Ende 29 des Axialabrings 7 der Außenschale 5 vor, so daß beim Aneinanderliegen der Einsatzlagerteile 1a, 1b die flachen Seiten des Kerns berühren, wobei ein Axialabstand a zwischen den freien Enden 29 der Axialringe 7 gebildet ist. Es sei klar, daß sich der kemseitige Axialsteg 27 bis zu der flachen Seite des Kerns 13 erstreckt, wobei der schalenseitige Axialsteg 25 bis zum freien Ende 29 der Außenschale 5 mündet. Beim Vormontagezustand sind die Axialstege 25, 27 zueinander axial versetzt.

In Fig. 2 ist das erfindungsgemäße Einsatzlager 3 im montierten Zustand in einer Aufnahme 31 eines tellerförmigen Flansches 33 gezeigt, der an einer nicht näher dargestellten Kraftfahrzeugkarosserie über Schrauben 35 befestigt ist. Die Aufnahme 31 ist durch eine zylindrische Aussparung in dem Flansch 33 gebildet und ist axial teilweise durch die Stufe 36 begrenzt. An der Stufe 36 ist eine konzentrische Öffnung vorgesehen, damit die Stange des Federbeins hindurchragen kann.

Die Abmessung der zylindrischen Aussparung der Aufnahme 31 ist derart, daß das Einsatzlager 3 ohne weiteres in die zylindrische Aufnahme 31 einsetzbar ist, wobei eine Spiel- oder Übergangspassung vorgesehen sein kann.

Beim Montieren werden die Außenschalen 5 axial aufeinander zu angenähert, bis die freien Enden 29 der Axialringe 7 in Kontakt kommen. Auf diese Weise nimmt die im Vormontagezustand größere axiale Ausdehnung des Elastomerkörpers 11 ab, bis die axiale Ausdehnung des Elastomerkörpers 11 kleiner als die radiale Ausdehnung ist. In dem Montagezustand ist der Elastomerkörper 11 stark vorkomprimiert.

Der Elastomerkörper 1 der beiden Einsatzlagerteile 1a, 1b begrenzt einen Hohlraum 41, der in Fig. 2 in einer radial nach innen gerichteten Pfeilform gebildet ist. Um das elastische Einsatzlager 3 in der komprimierten Stellung zu halten, ist auf der von dem Federbein abgewandten Seite des Einsatzlagers 3 ein Deckel 43 an dem Flansch 33 befestigt, der ebenfalls eine konzentrische Öffnung 45 sowie einen freien Zugriff auf die Stange des Federbeins bereitstellt.

Im aneinanderliegenden Zustand der Einsatzlagerteile 1a, 1b bilden die Kerne 13 eine Knochenform mit einem mittigen Durchgangsloch. Mit dem erfindungsgemäßen elastischen Einsatzlager 3 ist eine einfache Montage sowie eine einfache Realisierung einer elastischen Lagerung für die Stange eines Federbeins einer Fahrzeugkarosserie ermöglicht. Die Form des Elastomerkörpers 11 sowie der Außenschale 5 stellt eine homogene Vorkomprimierung innerhalb des Elastomerkörpers 11 bereit.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

## Patentansprüche

1. Einsatzlagerteil, das zur Bildung eines elastischen Einsatzlagers mit einem anderen Einsatzlagerteil gleichen oder ähnlichen Aufbaus kombinierbar ist und eine umlaufende Außenschale mit einem Radialabschnitt und einem Axialabschnitt, einen von der Außenschale umgebenen Elastomerkörper und einen starren Kern mit einem axialen Durchgang zum Befestigen des Einsatzlagers aufweist, welcher Kern derart in Axialrichtung über den Axialabschnitt vorsteht, daß sich bei einem Aneinanderlegen des Einsatzlagerteils an das andere Einsatzlagerteil gleichen oder ähnlichen Aufbaus die Einsatzlagerteile im wesentlichen auf radialer Höhe des Kerns berühren und ein Axialabstand zwischen den sich gegenüberliegenden Axialabschnitten der Außenschale gebildet ist, so daß bei Annäherung der Axialabschnitte der Elastomerkörper komprimiert wird, **dadurch gekennzeichnet, daß** der Radialabschnitt zum Axialabschnitt orthogonal steht, wobei der radial äußere Axialabschnitt ohne Radialrichtungskomponente und der radial innere Radialabschnitt ohne Axialrichtungskomponente gebildet ist.

2. Einsatzlagerteil nach Anspruch 1, das aus der Außenschale, dem Elastomerkörper und dem starren Kern besteht und das insbesondere ringförmig ist.

3. Einsatzlagerteil nach einem der Ansprüche 1 bis 2, bei dem der Elastomerkörper auf einer freien, von dem Radialabschnitt der Außenschale abgewandten Radialseite einen axialen Hinterschnitt aufweist.

4. Einsatzlagerteil nach einem der Ansprüche 1 bis 3, bei dem sich der Elastomerkörper von dem Kern, insbesondere von einem verstärkten Ende des Kerns, in unmontiertem Zustand sowohl in Axialrichtung als auch in Radialrichtung wegerstreckt, wobei eine Axialausdehnung größer, vorzugsweise um mehr als 10%, 15% oder 20% vorzugsweise bis 30%, größer, als die Radialausdehnung ist.

5. Einsatzlagerteil nach einem der Ansprüche 1 bis 4, bei dem der Elastomerkörper eine Innenseite der Außenschale vollständig belegt.

6. Einsatzlagerteil nach einem der Ansprüche 1 bis 5, bei dem der Elastomerkörper einen kernseitigen Anlagesteg, der auf gleicher axialer Höhe des Kerns endet, und insbesondere einen schalenseitigen Anlagesteg aufweist, der auf gleicher axialer Höhe der Außenschale endet.

7. Einsatzlagerteil nach einem der Ansprüche 1 bis 6, bei dem eine freie, der Außenschale abgewandte Seite des Kerns flach ist.

8. Elastisches Einsatzlager zum Abstützen eines sich im wesentlichen axial erstreckenden Bauteils, wie einer Dämpferstange eines Kraftfahrzeug-Federbeins, an einer Fahrzeugkarosserie und zum Montieren in einer karosserienahen Aufnahme, mit einem starren Kern, der einen axialen Durchgang zum Befestigen des Bauteils aufweist, einem den Kern zumindest teilweise radial umgebenden Elastomerkörper und zwei in Axialrichtung hintereinander angeordneten Außenschalenteilen, die den Elastomerkörper zumindest teilweise umgeben, wobei in einem Vormontagezustand die beiden Außenschalenteile unter Ausbildung eines Axialabstands zwischen sich an dem Elastomerkörper verliersicher befestigt sind und derart axial aufeinander zu bewegbar sind, daß der Elastomerkörper für einen Montagezustand druckvorgespannt ist, **dadurch gekennzeichnet, daß** jede Außenschale ringförmig ist und einen äußeren Axialabschnitt ohne Radialrichtungskomponente und einen inneren Radialabschnitt ohne Axialrichtungskomponente umfaßt, wobei freie Enden der Radialabschnitte aufeinander zugewandt sind.

9. Einsatzlager nach Anspruch 8, **dadurch gekennzeichnet, daß** die Außenschalen und ein zugeordneter Elastomerkörperabschnitt aneinander geklebt, insbesondere vulkanisiert, sind.

10. Einsatzlager nach Anspruch 8 oder 9, **dadurch gekennzeichnet, daß** die Radialabschnitte in dem Montagezustand vorzugsweise unter Ausbildung eines im wesentlichen stufenfreien Übergangs an deren Innen- und/oder Außenseite aneinander liegen.

11. Einsatzlager nach einem der Ansprüche 8 bis 10, **dadurch gekennzeichnet, daß** jeder Außenschale ein umlaufender insbesondere ringförmiger Elastomerkörperabschnitt zugeordnet ist, wobei beide Elastomerkörperabschnitte eine sich von einer radialen Außenseite insbesondere im Bereich einer Mittelradialachse radial nach innen erstreckende Aussparung begrenzen, wobei insbesondere die Aussparung im Vormontagezustand im wesentlichen pilzförmig ist, wobei insbesondere der Stiel der Pilzform durch die Außenschalen zumindest teilweise begrenzt ist, wobei insbesondere die Aussparung im Montagezustand eine Dreiecksform, insbesondere eine radial nach innen gerichtete Pfeilform, aufweist.

12. Einsatzlager nach Anspruch 11, **dadurch gekennzeichnet, daß** zumindest einer oder beide Elastomerkörperabschnitte an der Aussparung einen axialen Hinterschnitt aufweist.

13. Einsatzlager nach Anspruch 11 oder 12, **dadurch gekennzeichnet, daß** die Elastomerkörperabschnitte im Bereich einer sich zugewandten Radialseite derart geformt sind, daß ausschließlich die Elastomerkörperabschnitte im Montagezustand einen Hohlraum begrenzen, der insbesondere von den Hinterschnitten der Elastomerkörperabschnitte begrenzt ist.

14. Einsatzlager nach einem der Ansprüche 8 bis 13, **dadurch gekennzeichnet, daß** die Außenschalen, der Elastomerkörper und/oder die Aussparungen eine zu einer Radialachse, insbesondere einer Radialmittelachse, des Einsatzlagers symmetrische Form aufweisen.

15. Einsatzlager nach einem der Ansprüche 8 bis 14, **dadurch gekennzeichnet, daß** die Außenschalen, der Elastomerkörper und/oder die Ausparungen einen zu einer Axialachse, insbesondere einer Rotationsachse, des Einsatzlagers symmetrische Form aufweisen.

16. Einsatzlager nach einem der Ansprüche 8 bis 15, **dadurch gekennzeichnet, daß** sich der Elastomerkörper von dem Kern, insbesondere von einem verstärkten Ende des Kerns, in dem Vormontagezustand sowohl in Axialrichtung als auch in Radialrichtung wegerstreckt, wobei eine Axialausdehnung größer, vorzugsweise um mehr als 10%, 15% oder 20% vorzugsweise bis 30%, größer, als die Radialausdehnung ist.

17. Einsatzlager nach einem der Ansprüche 8 bis 16, **dadurch gekennzeichnet, daß** sich der Elastomerkörper von dem Kern, insbesondere von einem verstärkten Ende des Kerns, in dem Montagezustand sowohl in Axialrichtung als auch in Radialrichtung wegerstreckt, wobei eine Radialausdehnung größer, vorzugsweise um mehr als 20%, 30% oder 50% vorzugsweise bis zu 60%, größer, als die Axialausdehnung ist.

18. Einsatzlager nach einem der Ansprüche 8 bis 17, **dadurch gekennzeichnet, daß** das Einsatzlager aus zwei strukturell getrennten Einsatzlagerteilen besteht, die nach einem der Ansprüche 1 bis 7 ausgebildet sind.

19. Einsatzlager nach einem der Ansprüche 8 bis 18, **dadurch gekennzeichnet, daß** einander zugewandte insbesondere flache Radialflächen der Kerne für ein formkomplementäres Aneinanderliegen in dem Montagezustand geformt sind.

20. Einsatzlager nach einem der Ansprüche 8 bis 19 **dadurch gekennzeichnet, daß** die Elastomerkörper der Einsatzlagerteile jeweils eine sich zugewandte kernseitige Anlage und eine sich zugewandte schalenseitige Anlage bilden, wobei in dem Vormontagezustand die kernseitigen Anlagen aneinander liegen und die schalenseitigen Anlagen in dem Axialabstand zueinander liegen und im Montagezustand die jeweiligen kernseitigen Anlagen und die jeweiligen schalenseitigen Anlagen aneinander liegen, wobei insbesondere die Anlagen durch einen Axialsteg gebildet sind, wobei insbesondere die radiale Stärke der Axialstege im wesentlichen gleich ist.

21. Federbeinlageranordnung mit einer Aufnahme für ein nach einem der Ansprüche 8 bis 20 ausgebildetes Einsatzlager.

22. Federbeinlageranordnung nach Anspruch 21, bei dem das Einsatzlager in der Aufnahme durch einen insbesondere ringförmigen Deckel gehalten ist.

## Claims

1. Insert mount component for being combined with another insert mount component of same or similar structure in order to form an elastomeric insert mount, comprising a circumferential outer shell having a radial portion and an axial portion, an elastomeric body surrounded by the outer shell, and a rigid core with an axial passage for securing the insert mount, the core protruding axially beyond the axial portion such that when placing the insert mount component in contact with the other insert mount component of same or similar structure, the insert mount components contact each other substantially at the radial level of the core while forming an axial spacing between opposing axial portions of the outer shell so that the elastomeric body is compressed when the axial portions are brought together, **characterised in that** the radial portion is disposed orthogonally to the axial portion, wherein the radially outer axial portion is formed without a radially directed component and the radially inner radial portion is formed without an axially directed component.

2. Insert mount component according to claim 1 consisting of the outer shell, the elastomeric body and the rigid core, and being in particular ring-shaped.

3. Insert mount component according to one of the claims 1 to 2 in which the elastomeric body comprises an axial undercut at a free radial side facing away from the radial portion of the outer shell.

4. Insert mount component according to one of the claims 1 to 3 in which in an unmounted state the elastomeric body extends away from the core, in particular from a reinforced end of the core, in both axial and radial direction, wherein an axial extension is larger than the radial extension, preferably by more than 10%, 15% or 20%, preferably up to 30%.

5. Insert mount component according to one of the claims 1 to 4 in which the elastomeric body fully covers an inner side of the outer shell.

6. Insert mount component according to one of the claims 1 to 5 wherein the elastomeric body comprises an abutment web at the core side ending axially level with the core, and in particular an abutment web at the shell side ending axially level with the outer shell.

7. Insert mount component according to one of the claims 1 to 6 in which a free side of the core facing away from the outer shell is flat.

8. Elastomeric insert mount for supporting a substantially axially extending component like a shock absorber stem of a vehicle spring strut on a vehicle body and for being fitted in a receiving space close to the body, including a rigid core comprising an axial passage for securing the component, an elastomeric body radially surrounding the core at least in part, and two outer shell parts axially arranged behind each other and surrounding the elastomeric body at least in part, wherein in a premounted state the two outer shell parts are captively secured to the elastomeric body while forming an axial spacing between them, and can be moved axially towards each other such that the elastomeric body is precompressed for a mounted state, **characterised in that** each outer shell is ring-shaped and comprises an outer axial portion without radially directed component and an inner radial portion without axially directed component, wherein the free ends of the radial portions face each other.

9. Insert mount according to claim 8,**characterised in that** the outer shells and an associated elastomeric body portion are glued together, in particular vulcanised.

10. Insert mount according to claim 8 or 9, **characterised in that** the radial portions are in contact with to each other in the mounted state, preferably while forming an essentially stepless transition at their inner and/or outer side.

11. Insert mount according to one of the claims 8 to 10, **characterised in that** each outer shell is assigned to a circumferential, in particular ring-shaped elastomeric body portion, wherein both elastomeric body portions define a recess extending radially inwards from a radial outer side, in particular in the area of a radial centreline, wherein, in particular, the recess has substantially a mushroom shape in the premounted state, wherein in particular the stem of the mushroom shape is at least partially delimited by the outer shells, wherein in particular the recess has a triangular shape in the mounted shape, in particular a shape of an arrowhead pointing radially inwards.

12. Insert mount according to claim 11, **characterised in that** at least one or both elastomeric body portions comprise an axial undercut at the recess.

13. Insert mount according to claim 11 or 12, **characterised in that** in the area of a radial side facing them the elastomeric body portions are shaped such that in the mounted state exclusively the elastomeric body portions define a cavity, which is defined in particular by the undercuts of the elastomeric body portions.

14. Insert mount according to one of the claims 8 to 13, **characterised in that** the outer shells, the elastomeric body and/or the recesses are shaped symmetrically in relation to a radial axis, in particular to a radial centreline of the insert mount.

15. Insert mount according to one of the claims 8 to 14, **characterised in that** the outer shells, the elastomeric body and/or the recesses are shaped symmetrically in relation to an axial axis, in particular to a rotational axis of the insert mount.

16. Insert mount according to one of the claims 8 to 15, **characterised in that** in the premounted state the elastomeric body extends away from the core, in particular from a reinforced end section of the core, in both axial and radial direction, wherein an axial extension is larger than the radial extension, preferably by more than 10%, 15% or 20%, preferably up to 30%.

17. Insert mount according to one of the claims 8 to 16, **characterised in that** in the mounted state the elastomeric body extends away from the core, in particular from a reinforced end section of the core, in both axial and radial direction, wherein a radial extension is larger than the axial extension, preferably by more than 20%, 30% or 50%, preferably up to 60%.

18. Insert mount according to one of the claims 8 to 17, **characterised in that** the insert mount consists of two structurally separate insert mount components formed according to one of the claims 1 to 7.

19. Insert mount according to one of the claims 8 to 18, **characterised in that** in particular flat, radial surfaces of the cores facing each other are shaped to enable the cores to be in contact with each other with complementary shapes in the mounted state.

20. Insert mount according to one of the claims 8 to 19, **characterised in that** the elastomeric bodies of the insert mount components each form a contact location at the core side, facing themselves, and a contact location at the shell side, facing themselves, wherein in the premounted state the core-side contact locations contact each other and the shell-side contact locations are disposed with the axial distance between them and in the mounted state the respective core-side contact locations and the respective shell-side contact locations contact each other, wherein in particular the contact locations are formed by an axial web, wherein in particular the radial thickness of the axial webs is substantially equal.

21. Spring strut mount arrangement including a receiving space for an insert mount formed according to one of the claims 8 to 20.

22. Spring strut mount arrangement according to claim 21 wherein the insert mount is retained in the receiving space by an in particular ring-shaped cover.

## Revendications

1. Elément de palier d'insertion, destiné à être combiné avec un autre élément de palier d'insertion du même type ou similaire afin de former un palier d'insertion élastique, ayant une coquille extérieure circonférentielle avec une section radiale et une section axiale, un corps en élastomère entouré par la coquille extérieure et un noyau rigide avec un passage axial pour fixer le pallier d'insertion, le noyau dépassant la section axiale de telle sorte que lorsque l'élément de palier d'insertion est mis côte à côte avec l'autre élément de palier d'insertion du même type ou similaire les éléments de palier d'insertion se touchent au niveau radial du noyau, et une distance axiale est formée entre les sections axiales de la coquille extérieure en vis-à-vis l'une à l'autre en sorte que lors d'un rapprochement des sections axiales des corps en élastomère le corps en élastomère est comprimé, **caractérisé en ce que** la section radiale est orthogonale à la section axiale, dans lequel la section axiale radialement extérieure est formée sans composant directionnel radial, et la section radiale radialement intérieure est formée sans composant directionnel axial.

2. Elément de palier d'insertion selon la revendication 1 consistant en la coquille extérieure, le corps en élastomère et le noyau rigide, et étant notamment de d'une forme annulaire.

3. Elément de palier d'insertion selon l'une des revendications 1 à 2 dans lequel le corps élastomère présente une contre-dépouille axiale sur une face radiale libre étant opposée à la section radiale de la coquille extérieure.

4. Elément de palier d'insertion selon l'une des revendications 1 à 3 dans lequel, dans un état non assemblé, le corps en élastomère s'étend du noyau, notamment d'une extrémité renforcée du noyau, en direction axiale ainsi qu'en direction radiale, une extension axiale étant plus grande que l'extension radiale, de préférence par plus que 10%, 15% ou 20%, de préférence jusqu'à 30%.

5. Elément de palier d'insertion selon l'une des revendications 1 à 4 dans lequel le corps en élastomère couvre entièrement une face intérieure de la coquille extérieure.

6. Elément de palier d'insertion selon l'une des revendications 1 à 5 dans lequel le corps en élastomère a une âme du coté noyau qui se termine au même niveau axial que le noyau, et notamment a une âme du coté coquille qui se termine au même niveau axial que la coquille.

7. Elément de palier d'insertion selon l'une des revendications 1 à 6 dans lequel une face libre du noyau, opposé à la coquille extérieure, est plane.

8. Palier d'insertion élastique, destiné à supporter un élément s'étendant essentiellement en direction axiale, comme une tige d'amortisseur d'une jambe de suspension à ressort d'un véhicule, sur une caisse de voiture, et à être monté dans un espace récepteur proche de la caisse, ayant un noyau rigide avec un passage axial pour fixer l'élément, un corps en élastomère radialement entourant le noyau au moins partiellement, et deux pièces de coquilles extérieures arrangées l'une derrière l'autre en direction axiale, entourant le corps en élastomère au moins partiellement, les deux pièces de coquilles étant fixées de façon imperdable au corps en élastomère en formant un écart axial entre elles dans un état de prémontage et étant mobile l'une vers l'autre de façon que le corps en élastomère soit pré-comprimé pour un état de montage, **caractérisé en ce que** chaque coquille extérieure est d'une forme annulaire et comporte une section axiale extérieure sans composant directionnel radial et une section radiale intérieure sans composant directionnel axial, les extrémités des sections radiales libres étant vis à vis l'une à l'autre.

9. Palier d'insertion selon la revendication 8, **caractérisé en ce que** les coquilles extérieures et une section de corps en élastomère associée sont collées l'une à l'autre, notamment vulcanisées.

10. Palier d'insertion selon l'une des revendications 8 ou 9, **caractérisé en ce que** les sections radiales sont situées l'une auprès de l'autre dans l'état de montage, de préférence en formant une transition notamment sans épaulement à leur coté intérieure et/ou extérieure.

11. Palier d'insertion selon l'une des revendications 8 à 10, **caractérisé en ce que** chaque coquille extérieure est associée une section de corps en élastomère circonférentielle, notamment circulaire, les deux sections de corps en élastomère délimitant une découpe qui s'étend depuis une face extérieure radiale, notamment dans la région d'un axe radial central, radialement vers l'intérieur, notamment, dans l'état de prémontage, la découpe ayant essentiellement une forme de champignon, dans lequel la tige de la forme de champignon est délimitée au moins partiellement par les coquilles extérieures, notamment la découpe ayant une forme triangulaire dans l'état de montage, notamment une forme de flèche orientée radialement vers l'intérieur.

12. Palier d'insertion selon la revendication 11, **caractérisé en ce qu'**au moins l'une ou les deux sections de corps en élastomère présentent une contre-dépouille axiale à la découpe.

13. Palier d'insertion selon la revendication 11 ou 12, **caractérisé en ce que** les sections en élastomère sont formées de telle sorte que dans la région d'une face radiale vis à vis, seule les sections de corps en élastomère délimitent une cavité dans l'état de montage, la cavité étant délimitée notamment par les contre-dépouilles des sections de corps en élastomère.

14. Palier d'insertion selon l'une des revendications 8 à 13, **caractérisé en ce que** les coquilles extérieures, les corps en élastomère et/ou les découpes ont une forme symétrique à un axe radial, notamment un axe radial central, du palier d'insertion.

15. Palier d'insertion selon l'une des revendications 8 à 14, **caractérisé en ce que** les coquilles extérieures, les corps en élastomère et/ou les découpes ont une forme symétrique à un axe axial, notamment un axe de rotation, du palier d'insertion.

16. Palier d'insertion selon l'une des revendications 8 à 15, **caractérisé en ce que**, dans l'état de prémontage, le corps en élastomère s'étend du noyau, notamment d'une extrémité renforcée du noyau, en direction axiale ainsi qu'en direction radiale, une extension axiale étant plus grande que l'extension radiale, de préférence par plus que 10%, 15% ou 20%, de préférence jusqu'à 30%.

17. Palier d'insertion selon l'une des revendications 8 à 16, **caractérisé en ce que**, dans l'état de montage, le corps en élastomère s'étend du noyau, notamment d'une extrémité renforcée du noyau, en direction axiale ainsi qu'en direction radiale, une extension radiale étant plus grande que l'extension axiale, de préférence par plus que 20%, 30% ou 50%, de préférence jusqu'à 60%.

18. Palier d'insertion selon l'une des revendications 8 à 17, **caractérisé en ce que** le palier d'insertion consiste en deux éléments de palier d'insertion structurellement séparés, formées selon l'une des revendications 1 à 7.

19. Palier d'insertion selon l'une des revendications 8 à 18, **caractérisé en ce que** des faces radiales des noyaux en vis à vis et notamment plane, sont formées pour être en contact l'une avec l'autre dans l'état de montage ayant des formes complémentaires.

20. Palier d'insertion selon l'une des revendications 8 à 19, **caractérisé en ce que** les corps en élastomère des éléments de palier d'insertion forment respectivement un endroit de contact du coté noyau en vis à vis et un endroit de contact du coté coquille en vis à vis, les endroits de contact du coté noyau étant en contact entre eux et les endroits de contact du coté coquille étant situés avec l'écart axial entre eux dans l'état de prémontage, et les endroits de contact du coté noyau respectifs ainsi que les endroits de contact du coté coquille respectives étant en contact entre eux dans l'état de montage, dans lequel notamment les endroits de contact sont formés par une âme axiale, l'épaisseur radiale des âmes axiales étant essentiellement égale.

21. Agencement de support de jambe de suspension à ressort avec un espace récepteur pour un palier d'insertion formé selon l'une des revendications 8 à 20.

22. Agencement de support de jambe de suspension à ressort selon la revendication 21 dans lequel le palier d'insertion est retenu dans l'espace récepteur par un couvercle notamment de forme annulaire.
